# DEMANDE DE BREVET EUROPEEN

(11) **EP 1 424 181 A1**
(43) Date de publication de la demande: **02.06.2004**
(21) Numéro de dépôt: 02292926.9
(22) Date de dépôt: 26.11.2002
(51) Int. Cl.: B29B 17/02, B29B 17/00, B02C 19/18

(54) **Procédé de valorisation de matériaux composites**

(71) Demandeur: Tarkett Sommer S.A., 92748 Nanterre Cedex (FR)
(72) Inventeur: Bastin, Pierre, 6600 Bastogne (BE); Simon, Jean-Yves, 6810 Chiny (BE)
(74) Mandataire: Freylinger, Ernest T.

(57) **Abrégé**

Procédé de valorisation d'un matériau composite comprenant des matières fibreuses et des matières plastiques non-fibreuses, le procédé comprenant les étapes consistant à
- refroidir le matériau composite à une température entre -40°C et +10°C ; et
- broyer le matériau composite refroidi pour dissocier les matières fibreuses des matières plastiques non-fibreuses
- séparer les matières fibreuses des matières plastiques non-fibreuses.

## Description

### Introduction

La présente invention concerne un procédé de valorisation d'un matériau composite comprenant des matières fibreuses et des matières non-fibreuses.

### État de la technique

L'utilisation de matériaux composites comprenant des matières fibreuses et des matières plastiques non-fibreuses est très vaste.

De tels matériaux composites associant des matières fibreuses à des matières plastiques non-fibreuses sont couramment utilisés dans des revêtements de sols ou de murs. Ces matériaux composites peuvent également servir d'isolants thermiques ou soniques, par exemple dans le domaine du bâtiment ou de l'automobile. Pour ces applications, un feutre est associé à une couche compacte et/ou expansée de matière plastique non-fibreuse. Dans d'autres cas, la matière fibreuse ne se trouve pas en nappe, mais en grille associée à d'autres couches.

Parmi les matières fibreuses, on compte par exemple des nappes textiles à base de polyester, de polyamide et ou de polypropylène sous forme homo- ou copolymère, ou encore des produits non-tissés à base de polyamide, polyester ou polypropylène sous forme homo- ou copolymère. Les matières plastiques non-fibreuses quant à elles sont souvent à base de PVC, de polymères styréniques (SBS), de polyoléfines etc.

Dans certains cas, la couche de matière plastique non-fibreuse peut être en sandwich entre deux couches de matière fibreuse, p.ex. entre une nappe textile et un non-tissé.

Outre l'aspect de décor bien connu de textile/moquette p.ex., les matières fibreuses peuvent également être choisies pour :
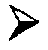 leur résistance mécanique - augmentant p.ex. la rigidité,
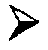 leur résistance thermique
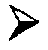 leur capacité de conférer au composite une meilleure stabilité dimensionnelle ...

Avec le développement de ces matériaux composites, se pose le problème du recyclage, soit en chutes de production, soit en récupération des produits en fin de vie après leur utilisation.

Le recyclage de ces matériaux composites cause généralement des problèmes pour les raisons suivantes :
- les matières fibreuses ont généralement des points de fusion très supérieurs à ceux des matières non-fibreuses. Par exemple, les fibres de polyamide et de polyester présentent un point de fusion avoisinant les 250°C tandis que les polyéthylènes fondent déjà autour de 120°C.
- les matières fibreuses sont généralement beaucoup plus rigides que les matières non-fibreuses.

Par conséquent, les assemblages de matières fibreuses et non-fibreuses, p.ex. en multicouches, sont difficiles à recycler. En effet, les matières fibreuses se dispersent mal dans les matières non-fibreuses refondues. Les températures de fusion pour les matières fibreuses sont souvent supérieures de 100°C à celles des matières non-fibreuses associées. Il est bien souvent illusoire de mélanger toutes les matières au-delà du point de fusion des matières fibreuses en raison des problèmes de dégradation thermique que cela causerait aux matières non-fibreuses. Il en résulte de très faibles propriétés mécaniques des matières recyclées. En outre, les matières fibreuses non fondues encrassent rapidement les filtres des installations de recyclage. Une séparation des matières fibreuses et non-fibreuses est donc indispensable pour valoriser correctement ces types de matières.

EP-A1-0 750 944 décrit un dispositif de broyage de matériaux dans lequel les matériaux sont refroidis à une température inférieure à la température de transition vitreuse du matériau avant d'être broyés. Le dispositif permet ainsi de broyer entièrement le matériau en fines particules. Lors d'un broyage, l'ensemble des matières est broyé en particules de plus ou moins la même taille. Par conséquent, un tel dispositif ne permet pas une séparation ultérieure des matières broyées. De plus, le matériau doit être refroidi à une température très basse, qui est généralement de l'ordre de -100°C. Le refroidissement du matériau à une aussi basse température entraîne un coût élevé.

### Objet de l'invention

L'objet de la présente invention est de proposer un procédé de valorisation d'un matériau composite à la fois efficace et économique. Cet objectif est atteint par un procédé de valorisation selon la revendication 1.

### Description générale de l'invention.

Conformément à l'invention, la présente invention propose un procédé de valorisation d'un matériau composite comprenant des matières fibreuses et des matières plastiques non-fibreuses, le procédé comprenant les étapes consistant à refroidir le matériau composite à une température entre -40°C et +10°C ; à broyer le matériau composite refroidi pour dissocier les matières fibreuses des matières plastiques non-fibreuses et à séparer les matières fibreuses des matières plastiques non-fibreuses. Les matières fibreuses et les matières plastiques non-fibreuses peuvent être récupérées séparément et recyclées.

En effet, lors du broyage à ces températures, les fibres ne sont quasiment pas cassées et restent longues tandis que les matières plastiques non-fibreuses sont broyées pour former des particules de taille plus ou moins régulière. Le fait qu'à ces températures, on arrive à broyer les matières plastiques non fibreuses sans pour autant casser les fibres est surprenant. On devrait s'attendre à ce que les fibres se cassent également vu que la matière qui les compose est rigide aux températures employées. Or, tel n'est pas le cas. La matière non-fibreuse se dissocie de la matière fibreuse et une séparation des deux matières est facilitée.

Le procédé selon l'invention a un autre effet particulièrement surprenant du point de vue température de broyage. En effet, selon l'état de la technique, le matériau composite devrait être refroidi à une température inférieure à la température de transition vitreuse du matériau composite. Sachant que la transition vitreuse des polyoléfines est aux environs de -80°C, un matériau composite comprenant des polyoléfines devrait donc être refroidi à une température inférieure à -80°C avant le broyage. Or, le broyage de tels matériaux composites peut aisément être effectué à des températures d'environ - 40°C ; c.-à-d. à une température nettement supérieure à la transition vitreuse des polyoléfines. Ceci constitue bien entendu un avantage économique puisque la consommation de réfrigérant p.ex. d'azote liquide ou de glace carbonique, reste modérée.

Le procédé selon l'invention permet la dissociation et la séparation ultérieure quasi totale des fibres par rapport aux matières plastiques non-fibreuses et donc un recyclage efficace des matériaux composites. De plus, grâce aux températures de broyage modérément basses, les coûts associés au refroidissement restent faibles, ce qui est économiquement avantageux.

Selon un premier mode de réalisation avantageux, le matériau composite est refroidi à une température entre -30°C et -10°C.

La matière plastique non-fibreuse peut comprendre du PVC, des polymères styréniques tels que le SBS ou des polyoléfines. Même si la matière plastique non-fibreuse est lubrifiée et/ou plastifiée et/ou chargée, l'aptitude ou la capacité de broyage, à ces températures, de la matière plastique non-fibreuse est excellente.

La matière fibreuse peut être un feutre associé à une couche compacte et/ou expansée de matière plastique non-fibreuse.

La matière fibreuse peut être une nappe textile réalisée p.ex. selon le procédé tuft ou aiguilleté ou un non-tissé.

La matière fibreuse peut être une matière plastique comprenant les polyesters et/ou les polyamides et/ou les polyoléfines sous forme d'homo- ou copolymères, les fibres de verre, les fibres de polyaramides etc.

Après le broyage du matériau composite, les matières fibreuses peuvent être séparées mécaniquement des matières plastiques non-fibreuses par exemple à l'aide d'un tamis ou d'une centrifugeuse.

### Exemples d'applications

### Exemple 1 : Séparation d'un composite comprenant une ou plusieurs sous-couche(s) en matière plastique non-fibreuse et un non-tissé

### A) Partie fibreuse

Dans un tel cas de figure, les fibres sont constituées par un non-tissé à base de fibres polyester et/ou de fibres coextrudées polyester-polyamide.

### B) Partie non-fibreuse

La sous-couche est à base d'un compound qui comprend entre autres du PVC plastifié, chargé, lubrifié ou bien des polyoléfines chargées, lubrifiées, additivées comprenant des huiles plastifiantes (process oils).

Bien entendu, un compound à base d'autres matières plastiques ( p. ex. SBS ou SBR) serait également utilisable.

### C) Exemples de compositions

Les charges minérales sont p. ex. de la craie , du calcite , de la baryte , de la dolomie , de al silice , du kaolin.

Les plastifiants (cas du PVC) sont ceux bien connus du PVC (phtalates par exemple).

Les huiles plastifiantes sont des huiles minérales issues du raffinage du pétrole à caractère plus ou moins aromatique ou naphténique ou paraphinique.

Les lubrifiants et additifs sont ceux généralement proposés par la technique et dans le commerce.
C1) Exemples de sous-couche PVC

| | |
|---|---|
| PVC | 27,5% |
| DINP | 17% |
| Craie | 29% |
| Baryte | 24% |
| Stabilisant/lubrifiant | 1,5% |
| Additifs divers | 1% |

C2) Exemples de sous-couche polyoléfine
PEBD(polyéthylène basse densité) / LLDPE (linear low density polyethylene) / VLDPE (very low density linear polyethylene) / EVA (ethylene-vinylacetate copolymer) / EPDM (ethylene propylene diene copolymer) ou POE (polyoléfines élastomères métallocènes ou non) ou POP (polyoléfines plastomères métallocènes ou non) : 16%

| | |
|---|---|
| Huile minérale | 6% |
| Craie | 25% |
| Baryte | 52% |
| Additifs | 1 % |

Il va de soit que les compositions peuvent changer dans des proportions relativement importantes suivant les exigences finales demandées à la sous-couche. Le raisonnement s'applique bien entendu pour les variantes à base de polypropylène (copolymères ou non) et HDPE (high density polyethylene) ainsi que MDPE (medium density polyethylene).
C3) Répartitions des couches
non tissé : varie de 15 à 70 (ou même plus) g/m²
sous-couche : varie typiquement de 1 à 7 kg/m²

### D) Prébroyage des composites

Les composites sont broyés grossièrement à température ambiante sans chercher à séparer les fibres. Les dimensions de broyage sont de l'ordre du cm de côté.

### E) Refroidissement des granulés

Les granulés sont transportés dans un cylindre à l'aide d'une vis d'Archimède. De l'azote liquide circulant à contre-courant dans la vis refroidit les granulés. Lorsque les granulés sont à une température entre -40 et -10°C, les granulés tombent dans le broyeur. Cette température peut varier en fonction de la souplesse et la ductilité de la sous-couche plastique.

### F) Séparation des fibres et des poudres plastiques

Comme constaté, les fibres ne sont pratiquement pas coupées lors de l'opération de broyage, alors que les matières plastiques non-fibreuses sont réduites à l'état de poudres.

Par sédimentation, à l'aide de tamis ou de soufflage, la séparation physique des fibres et des poudres est très aisée.

### G) Réutilisation des poudres récupérées

On peut facilement récupérer 80% et souvent même plus de 90% de la matière non fibreuse sous forme de poudres.

A l'inverse, les quantités de fibres finement coupées, susceptibles de passer à travers les tamis sont très faibles. On peut estimer que cette proportion est nettement en-dessous de 10% des quantités initiales des fibres.

Le faible taux de fibres très fines passant à travers les tamis est très peu gênant car ces fibres se comportent comme de la charge minérale.

Les poudres récupérées peuvent être réintroduites dans la structure "sous-couche" à des quantités dépassant 50% en poids sans dégrader les conditions de mise en oeuvre de cette sous-couche (absence de blocage des filtres d'extrusion p. ex.) ainsi que celles liées à un processus ultérieur de thermoformage (p ex).

### Exemple 2 : Séparation d'un composite à base d'une matière plastique et d'un feutre

Des résultats également très positifs de séparation après broyage à température relativement basse (-30 à -10°C indicatifs) ont été obtenus avec des composites plastiques - feutres

Les feutres sont constitués p. ex. de déchets textiles effilochés.

A l'inverse des non tissés qui peuvent être également de faible épaisseur, les feutres peuvent avoir une épaisseur de plusieurs mm (parfois même plusieurs cm). Ces feutres peuvent être liés par une résine thermodurcissable de type phénol-formaldéhyde p. ex. ou thermoplastique. Suivant l'état de compression, on peut obtenir des feutres souples (peu compressés) ou rigides (compression élevée). Ces feutres sont utilisés pour les insonorisants ou les pièces de structures rigides (p. ex. tablettes arrières pour le secteur automobile).

Les rendements de séparation sont comparables à ceux cités dans l'exemple 1.

### Exemple 3 : Séparation d'un composite à base d'une matière plastique et d'une matière textile tuft ou aiguilletée

Des résultats également très positifs de facilité de séparation après broyage à température relativement basse (-30 à -10°C indicatifs) ont été obtenus avec des composites à base d'une matière plastique et d'une matière textile tuft ou aiguilletée.

Les parties non-fibreuses ont la même composition que dans l'exemple 1.

Les textiles comprennent des fibres polyamide, des fibres polyester ou un mélange de ces deux fibres avec éventuellement un certain pourcentage de fibres polyéthylène et/ou de fibres polypropylène.

Ces fibres sont généralement liées à leur base par un latex de type SBR et/ou par une enduction de poudres polyéthylène.

Les rendements de séparation sont conformes à ceux cités dans l'exemple 1.

### Exemple 4 : Séparation d'un composite à base d'une matière plastique et de fibres de verre

La sous-couche (matricée par le voile de verre) est de type polyoléfine ou PVC (suivant l'exemple C1 et C2).

On constate que le broyage aux températures indiquées (p ex -30 à - 10°C), dépendant de la ductilité de la formulation plastique, engendre la production de granulés tout en évitant une pulvérisation excessive du voile de verre. La production de grandes quantités de petites particules de verre de très petites dimensions est ainsi évitée.

De ce fait, le broyage de composites plastiques - voile de verre suivant la méthode décrite diminue fortement les inconvénients sanitaires liés à la présence de particules de verre de très petites dimensions.

Remarques sur la consommation d'azote liquide :

On l'estime approximativement à 0,5 kg d'azote liquide /kg de composite à séparer, ce qui prouve que la matière n'est pas refroidie à des températures très basses.

Un broyage cryogénique classique entraîne une consommation beaucoup plus élevée en azote liquide. Outre les coûts beaucoup plus élevés d'un tel broyage cryogénique classique, ces procédés sont moins performants au niveau de la séparation des fibres et des matières plastiques non-fibreuses.

Remarques sur la récupération des fibres

Suivant leur degré de pureté , on peut envisager de les réextruder à part pour en faire des pièces rigides tels que des pièces de structures ou passage de roue pour le secteur automobile.

Si les fibres sont des mélanges de polyester, polyamide et/ou polypropylène, il suffit de mettre quelques pour cent d'un agent "compatibilisant" des différentes sortes de fibres pour obtenir de bonnes caractéristiques des fibres recylées.

## Revendications

1. Procédé de valorisation d'un matériau composite comprenant des matières fibreuses et des matières plastiques non-fibreuses, comprenant les étapes consistant à
- refroidir le matériau composite à une température entre -40°C et +10°C ; et
- broyer le matériau composite refroidi pour dissocier les matières fibreuses des matières plastiques non-fibreuses et
- séparer les matières fibreuses des matières plastiques non-fibreuses.

2. Procédé selon la revendication 1, **caractérisé en ce** le matériau composite est refroidi à une température entre -30°C et -10°C.

3. Procédé selon la revendication 1 ou 2, dans lequel la matière plastique non-fibreuse comprend du PVC des polymères styréniques tels que le SBS ou des polyoléfines.

4. Procédé selon l'une des revendications 1 à 3, dans lequel la matière plastique non-fibreuse est lubrifiée et/ou plastifiée et/ou chargée.

5. Procédé selon l'une des revendications 1 à 4, dans lequel la matière fibreuse comprend un feutre.

6. Procédé selon l'une des revendications 1 à 4, dans lequel la matière fibreuse comprend une nappe textile.

7. Procédé selon l'une des revendications 1 à 4, dans lequel la matière fibreuse comprend un non-tissé.

8. Procédé selon l'une des revendications 5, 6 ou 7, dans lequel la matière fibreuse comprend les polyesters et/ou les polyamides et/ou les polyoléfines sous forme d'homo- ou copolymères, les fibres de verre, les fibres de polyaramides.

9. Procédé selon l'une des revendications 1 à 8, dans lequel les matières fibreuses sont séparées mécaniquement des matières plastiques non-fibreuses.
